(19) Europäisches Patentamt
European Patent Office
Office européen des brevets

(11) EP 0 537 908 B1

(12) **EUROPEAN PATENT SPECIFICATION**

(45) Date of publication and mention of the grant of the patent:
**03.06.1998 Bulletin 1998/23**

(51) Int Cl.6: **G03B 19/04**

(21) Application number: **92308476.8**

(22) Date of filing: **17.09.1992**

(54) **Photographing unit**

Photographische Einheit

Unité photographique

(84) Designated Contracting States:
**DE FR GB NL**

(30) Priority: **18.10.1991 JP 271187/91**
**16.04.1992 JP 122717/92**

(43) Date of publication of application:
**21.04.1993 Bulletin 1993/16**

(73) Proprietor: **KONICA CORPORATION**
**Tokyo 163 (JP)**

(72) Inventors:
- **Iwagaki, Masaru, Konica Corporation Hino-shi, Tokyo (JP)**
- **Iijima, Toshifumi, Konica Corporation Hino-shi, Tokyo (JP)**
- **Todo, Kazuo, Konica Corporation Hino-shi, Tokyo (JP)**

(74) Representative:
**Simpson, Alison Elizabeth Fraser et al**
**Urquhart-Dykes & Lord,**
**91 Wimpole Street**
**London W1M 8AH (GB)**

(56) References cited:

| | |
|---|---|
| **EP-A- 0 332 832** | **EP-A- 0 423 844** |
| **DE-A- 2 540 738** | **DE-A- 3 721 557** |
| **GB-A- 2 194 067** | **GB-A- 2 200 760** |
| **US-A- 4 592 636** | |

- **PATENT ABSTRACTS OF JAPAN vol. 4, no. 82 (P-15) 13 June 1980 & JP-A-55 046 730**
- **"Technische Fotografie" by G Schröder; Vogel-Verlag, 1st ed., Würzburg, Germany, 1981; page 53**
- **"Théorie photographique appliquée" by P Kowaliski; Masson et Cie. Ed., Paris, 1972; pages 100-102**

Remarks:
The file contains technical information submitted after the application was filed and not included in this specification

EP 0 537 908 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

### Field of the Invention

This invention relates to a so-called 'a film with a lens', that is, a phototaking unit attached with a strobe-flash, which is loaded in advance with a film (or a light sensitive material) so that pictures can immediately be taken.

### Background of the Invention

In recent years, the so-called cameras with lens (or photographing units) have been popularly sold in the state where the simple plastic-made cameras are each loaded with a silver halide color light sensitive material. This has released the users from the trouble for loading films on their ordinary type cameras and from a film-loading failures, and this has also increased the photographic opportunities by the simplicity thereof. Further, those of the built-in strobe-flash type, the telephoto type and the ultra-wide angle type have been developed and put in practical use so as to meet the photographic purposes.

As is known, a film with a lens is a phototaking unit loaded in advance with a light sensitive material. A user uses a phototaking unit for making photographs on only the loaded light sensitive material and, after taking the pictures, the user send the phototaking unit to a photofinisher as it is still loaded with the exposed light sensitive material. Therefore, the phototaking units have been so designed as to be simple in structure and inexpensive in cost.

Accordingly, these phototaking units were too much aimed to reduce the cost by substantially simplifying the drive system, optical system and electric system as compared to the ordinary cameras. Therefore, there are many unsatisfactory points in developments and print qualities, so that the improvements have been demanded. For the viewfinders, the so-called frame type lensless viewfinders are provided for saving the costs. The viewfinders of this type phototaking units are mainly for confirming the approximate center position of a subject and, therefore, most of the viewfinders have a field ratio of the order of 60 to 70%.

When a phototaker holds his phototaking unit at a subject while peeping through the viewfinder so as to put the whole subject in the viewfinder frame, he has to take pictures from a needlessly farther point than the subject may be photographed. It is, therefore, the facts that the resulting prints come out unsatisfactorily because the subject is photographed unexpectedly small in size and that the visual image qualities are deteriorated because the subject images come out small. With a film-integrated type camera having a built-in strobe-flash unit, a picture has to be taken from a needlessly farther point when taking the picture with the strobe-flash, so that there may often be some under-exposures.

On the other hand, for the purpose of remedying the defects of the above-mentioned phototaking unit with a built-in strobe-flash unit, a light sensitive material having an ISO speed of not lower than 320 is commonly loaded thereon, because the photosensitive speed thereof can be satisfied by making the aperture wider even in the case of a phototaking unit so designed that every picture can be in focus even through a simple lens.

However, even if making use of a high speed light sensitive material such as that having an ISO speed of not lower than 320, there are still the problems that a picture is under-exposed when taking the picture too far from a subject with a phototaking unit having a simple strobe-flash unit emitting a low flash-light quantity (or that having a small guide number) and that the image qualities in the shadow areas of the resulting printed images are deteriorated, because of the high speed light sensitive material.

Japanese Patent Publication Open to Public Inspection (hereinafter referred to as JP OPI Publication) No. 2-272449/1990 discloses a light sensitive material packing unit in which the image qualities are improved. This technique is to improve the problem peculiar to the units each having a telephoto lens and is, therefore, quite different from the present invention.

Document DE-A-2540 738 discloses a camera comprising a viewfinder, a photo-taking lens and a strobe-flash, and discusses the value of the guide number of the flash and the sensitivity of the film to be used with the camera according to the photographic conditions.

### SUMMARY OF INVENTION

It is, therefore, an object of the invention to provide a photo-taking unit having a built in strobe-flash unit by which an under-exposure can hardly be made and, should there be an under-exposure condition, the resulting image quality in any shadow areas can be improved without any failure.

According to the present invention there is provided a photo-taking unit comprising a cartridge containing a photographic colour film, an optical viewfinder through which an image is observed, a photo-taking lens having a fixed focal length to form an image on the surface of said film and a fixed F-number, a strobe-flash having a fixed guide number of not more than 11, wherein the optical axis of the optical viewfinder is different from the optical axis of the

photo-taking lens,
CHARACTERISED IN THAT the viewfinder field ratio lies in the range 87 to 120 percent, wherein the viewfinder field ratio is the ratio, as a percentage, of the area of the subject image viewed through the viewfinder field to the area of the subject image formed on said film, and the photographic colour film has an ISO sensitivity of not less than 320 and not more than 1,000 measured in accordance with JIS K 7614-1981 and, when unexposed, has an RMS granularity for blue light of not more than 15, for green light of not more than 13 and for red light of not more than 14 after photographic processing.

In preferred embodiments the photo-taking lens has a fixed diaphragm with an aperture not greater than 11 or, more preferably, an aperture in the range of 11.5 to 15. The viewfinder preferably has a magnification in the range 0.4 to 0.7. A preferred viewfinder field ratio lies in the range 95 to 120 per cent.

The phototaking unit may have a photo-taking lens with a focal lenght not greater than 33mm.

BRIEF DESCRIPTION OF THE DRAWINGS

Figure 1 shows a perspective view of a phototaking unit of the present invention; and
Figure 2(a) shows a top-plan view of a cartridge; and
Figure 2(b) shows a side cross-sectional view of the main body of a phototaking unit;
wherein

1 designates a phototaking lens;
2 is a viewfinder;
3 is a shutter button;
4 is a film winding member;
5 is a unit body;
6 is a strobe-flash unit;
6A is a strobe-flash switch;
7 is a lens hood; and
21 is a cartridge

**Detailed Description of the Invention**

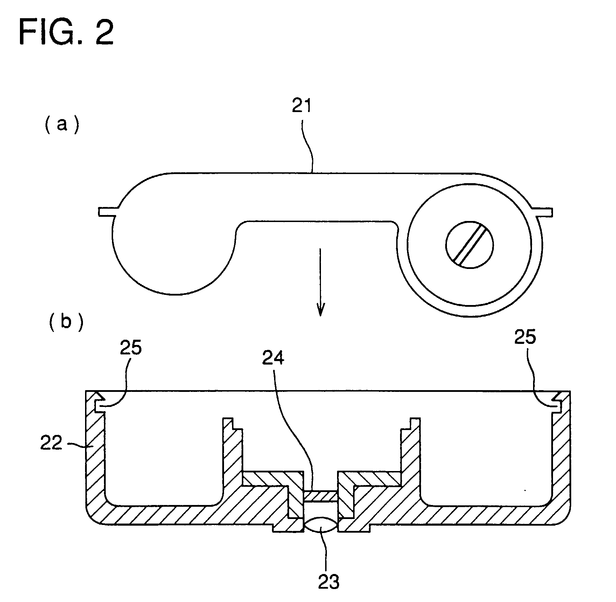

In the invention, the phototaking unit may be such a unit as shown in Fig.1 loaded in the main body thereof with a color light sensitive material inserted into a cartridge or may be a unit having such a system as shown in Fig.2 comprising a camera part (b) and a cartridge part (a) detachable from the camera part and serving also as the back lid of the camera part. The latter unit is more advantageous to make reuse of the camera part and to recycle the cartridge part.

In the invention, the guide number of the strobe-flash is to be not more than 11 and preferably within the range of 7 to 11. When a phototaking unit is loaded with a strobe-flash having a guide number exceeding 11, a capacitor, a light emission tube and an electric system are made larger in size, heavier in weight and higher in cost, so that the phototaking unit cannot be satisfactory to meet the original purposes. In addition to the above, when the guide number exceeds 11, there is the disadvantage that a subject may be over-exposed as the the case may be, unless otherwise an automatic strobe-flash unit is used, so that any highlight portions may be difficult to reproduce.

According to the invention, a phototaking unit having a low probability to cause an under-exposure can be provided even if a small and light strobe-flash unit is used.

As for the electric sources for strobe-flash units, lithium batteries may be used as well as any ordinary type alkali batteries. Further, for the purposes of preventing the environmental contamination derived from a used battery disposal or minimizing the problems of reprocessing used batteries, it is further desired to use a battery not containing any mercury or a rechargeable battery. In the case of a phototaking unit having a system comprising a camera part and a cartridge part detachable from each other such as that shown in Fig.2 and when a rechargeable battery is used in the camera part, the battery can be recharged when making reuse of the camera part. Therefore, it is greatly advantageous to make effective use of resources and to prevent the environmental contamination.

The viewfinder field ratio means a percentage of a subject area inside a viewfinder frame to an effective image area formed on a light sensitive material. Ordinary type phototaking units are so designed as to form a wider image area on a light sensitive material than in the subject area confirmed by a phototaker through a viewfinder. Therefore, in most of the cases, the viewfinder field ratios of phototaking units are less than 90%. In the phototaking units of the invention, the viewfinder field ratios thereof are within the range of 87 to 120% and preferably 100 to 110%. When a viewfinder field ratio exceeds 100%, it is desired to put a mark for indicating a phototaking area (that is an effective image area) in the viewfinder. When a viewfinder field ratio exceeds 120%, it is not desirable, because the phototaking

area seen through the viewfinder becomes too small to hardly see an aimed subject.

For achieving the viewfinder field ratios of the invention, at least one concave lens is provided to a viewfinder section. In this case, two or more pieces of Galilei type lenses may desirably be used. The magnification of the viewfinder is desirably within the range of 0.4 to 0.7 times from the visual point of view.

The aperture of the phototaking optical system of a phototaking unit is to be fixed and to have an aperture value of not less than 11 and preferably within the range of 11.5 to 15.

In the invention, the objects can be achieved by making combination use of a viewfinder field ratio and a fixed aperture value even in the case of a phototaking unit having a built-in strobe-flash unit having a guide number of not more than 11.

In the invention, the focal length of a lens is to be not longer than 33mm, desirably not longer than 30mm and preferably within the range of 15 to 29mm. The lens may be comprised of a single lens and may also be comprised of a 2-group/2-element or more-group/more-element. In the case of a 2-group/2-element lens, it is desired to comprise the primary lens having a negative refraction and the secondary lens having a positive refraction.

In the invention, the objects of the invention can be achieved by making combination use of a viewfinder field ratio and the focal length of a phototaking lens, even when the phototaking unit has a built-in strobe-flash unit having a guide number of not more than 11.

In the phototaking units of the invention, the variable or fixed shutter speeds may be used. From the viewpoints of the simple handling, the characteristics of color light sensitive materials used and the cost-saving of the phototaking units, the shutter speeds are within the range of 1/25 to 1/500 sec., desirably 1/50 to 1/250 sec. and preferably 1/80 to 1/125 sec.

The invention is also effective in the case where a phototaking unit comprises a camera part and a cartridge part and these parts can be detachable from each other, as shown in Fig.2.

In the invention, the term, 'a cartridge part', means that a light sensitive material is loaded in a cartridge comprising a film-roll chamber for storing an unexposed rolled light sensitive material, a take-up chamber for taking up an exposed light sensitive material and a bridge part having an aperture having an area of not smaller than 400mm$^2$ interconnecting the above-mentioned chambers. The above-mentioned aperture area is to be within the range of desirably 600 to 2500mm$^2$ and preferably 800 to 1200mm$^2$ from the viewpoint of keeping the balance between an image quality and a camera size. In the photographic film cartridges of the invention, the aperture areas thereof are substantially the same as the effective areas of pictures.

The configuration of the aperture is desirable to be rectangular. Taking the camera shapes into consideration, the ratio of the longer side to the shorter side of the rectangle is within the range of 1.2 to 2.0, desirably 1.3 to 1.7 and preferably 1.4 to 1.6. When the ratio is within the above specified range, an image can be obtained stably and psychovisually.

The size of a rolled light sensitive material loaded in a cartridge is desirable to fit the systems currently available on the market. To be more concrete, it is desired that the widths of the light sensitive materials are 35±1mm and the lengths thereof are of the order of a 135 size film for 12ex., 20ex., 24ex or 36ex. However, when making a film base more thinner, a cartridge and a camera can both be miniaturized and a film can also be made more longer (to be for 72ex. or 100ex., for example) without making a camera size bigger.

It is desired that a light sensitive material is made adhered to a spool at least in either one of a filmroll chamber and a film take-up chamber.

It is desired that the cartridge materials of the cartridge parts are to be plastics, from the viewpoints of making a phototaking unit light in weight, simplifying the operations, making the costs inexpensive and recycling the materials.

The requirements for desirable plastic cartridges are as follows. (1) Light tightness is to be excellent; (2) the influences on the photographic characteristics of light sensitive materials are to be minimized; and (3) the reuse is to be readily made. When satisfying the above-mentioned requirements, any known plastic cartridges can be used. The desirable examples thereof include those made of polystyrene, polypropylene, polyethylene, polyvinyl chloride, polymethyl methacrylate, polyethylene terephthalate, cellulose acetate and the copolymers thereof each provided with a light tightness upon addition of carbon black or a pigment. For the purpose of making a reuse more effectively, it is desired that the same plastics are to be used both for a cartridge and for the spool put in the cartridge.

It is desired that a cartridge loaded with a light sensitive material is to be applied with a light-tightening means, because the cartridge has an aperture for making an image exposure. The desirable light tightening means include, for example, an elastic light tightening member such as those given in JP OPI Publication No. 60-120448/1985, a light tightening member such as those given in Japanese Utility Model OPI Publication No. 2-136247/1990, a pressure light tightening member such as those given in Japanese Utility Model OPI Publication No. 2-136248/1990, a light tightening paper such as those given in JP OPI Publication Nos. 2-275441/1990 and 2-275442/1990 and a light tightening path such as those given in JP OPI Publication No. 54-111822/1979 and JP Examined Publication No. 46-30055/1971.

In the invention, it is desired that a cartridge part and a camera part are to be detachable from each other. It is, therefore, desired that at least one of the parts has a coupling member for attaching to and detaching from each other

and further has a stopper for preventing any erroneous or unwilling detachment. It is also desired that the cartridge part can further serve as the back lid of the camera part from the viewpoints of making the phototaking unit light in weight, simplifying the operations and making the regenerative reuse ready. A concrete example thereof is shown in Fig.2.

The phototaking unit of the invention is desirably comprised of a camera part and a cartridge part each connected together. It is, however, desired that a part or the whole of the outside of a phototaking unit is to be covered. If this is the case, it is effective, not only because, should a user let a phototaking unit fall, the shock can be absorbed so as to prevent a driving system, an optical system and an electric system from producing any troubles and to prevent an image formed on a light sensitive material from being damaged, but also because any exposed valuable image information damages produced by an erroneous or unwilling operation can be prevented by separating a camera part from a cartridge part and vice versa.

The covers are desirable to be made of a material capable of absorbing any shock including, for example, paper, sponge, rubber, leather and cloth. Any configuration of the covers can be used without limitation. However, a belt-like or box-like covers are desirably used and, among them, a perforated box-like cover is more desirably used, provided that no hindrance can be produced to the functions or operations of the lens section, viewfinder section, strobe-flash section, shutter button section and film winding section of a phototaking unit.

It is desired that the phototaking units of the invention are to be sealed tight in a plastic case or a moisture-proof bag, from the time when they were manufactured to the time when they are actually used. In the sealed tight bags, the relative humidity at 25°C is within the range of 30 to 70%, desirably 40 to 60% and particularly 45 to 55%. It is also desired that the partial oxygen pressure is to be made lower than the atmospheric pressure by filling up inert gas therein.

As for the camera parts, not only newly manufactured camera parts but also camera parts having already been sold on the market and separated from a cartridge part after exposed to light can be used. For effectively utilizing resources, preventing any environmental contamination produced by wastes and making a regenerative use ready, it is desired to make reuse of the above-mentioned camera parts or to make them returnable. When making reuse of the camera parts, it is desired to inspect them if required before connecting them to the corresponding cartridge parts. It is further desired to put the records of how many reuses made on the main body of the camera parts, respectively.

In the case where a camera part has an electric power source, that is, a battery, the residual voltage thereof are checked up and the camera part may be reused after replacing it, if required, by a fresh one. In the case of a rechargeable battery, the camera parts may be reused after recharging the battery. The latter case is particularly desirable, because the environmental contamination produced by waste batteries can remarkably be reduced.

The objects of the invention can be achieved by setting an RMS granularity in the unexposed area so as to satisfy the specific requirements, after completing the development process of a light sensitive material used in a phototaking unit of the invention.

The RMS granularity in the unexposed areas can be set as follows. One of the setting manners can be achieved by increasing the uniformity of the dye clouds produced in a development process. This manner can be adjusted by controlling the ratio of the reactivity of a photographic coupler to a silver halide emulsion. And, in a non-diffusible coupler, the above-mentioned controls can also be made by making the granularity inconspicuous by providing a very slow mobility to the color developing dye of the coupler. Also, the RMS granularity of the produced dye clouds can be lowered by making the finely crystallized grains of a silver halide emulsion.uniform. The improvement of the uniformity of the finely crystallized grains can be achieved by devising the conditions for preparing the silver halide emulsion. For example, it is effective to use a process in which iodine ions are supplied from fine silver iodide such as that given in JP Application No. 63-224002/1988 or another process in which fine silver iodobromide grains such as that given in JP OPI Publication No. 1-183417/1989 are grown up on seed grains in an Ostwald ripening process.

In the invention, the specific photographic sensitive speed of a light sensitive material shall be determined in the following test procedures (which are in accordance with JIS K 7614-1981).

(1) Test conditions

A test is to be tried in a room at a temperature of 20±5°C and a relative humidity of 60±10%. A light sensitive material subject to the test is to be used after allowing to stand in the above-specified conditions for not shorter than one hour.

(2) Exposure

(i) On an exposed surface, the relative spectral energy distribution of reference rays of light include those shown below.

| Wavelength (nm) | Relative spectral energy* |
|---|---|
| 360 | 2 |
| 370 | 8 |
| 380 | 14 |
| 390 | 23 |
| 400 | 45 |
| 410 | 57 |
| 420 | 63 |
| 430 | 62 |
| 440 | 31 |
| 450 | 93 |
| 460 | 97 |
| 470 | 98 |
| 480 | 101 |
| 490 | 97 |
| 500 | 100 |
| 510 | 101 |
| 520 | 100 |
| 530 | 104 |
| 540 | 102 |
| 550 | 103 |
| 560 | 100 |
| 570 | 97 |
| 580 | 98 |
| 590 | 90 |
| 600 | 93 |
| 610 | 94 |
| 620 | 92 |
| 630 | 88 |
| 640 | 89 |
| 650 | 86 |
| 660 | 86 |
| 670 | 89 |
| 680 | 85 |
| 690 | 75 |
| 700 | 77 |

* 560nm was regarded as the reference value of 100.

(ii) On the exposed surface, the illuminance was varied by making use of an optical wedge having the spectral transmission density variations in the wavelength region from 360 to 700nm in any portions of the wedge, and having an illuminance variation of not more than 10% in the region of less than 400nm and not more than 5% in the region of not less than 400nm.
(iii) The exposure time was 1/100 of a second.

(3) Development process

(i) All through the time between making an exposure and completing a development, a light sensitive material subject to test is to be kept at a temperature of 20±5°C and a relative humidity of 60±10%.
(ii) The development is to be completed not earlier than 30 minutes but not later than 6 hours after making exposure.
(iii) The development is to be carried out as follows.

| | | |
|---|---|---|
| 1. Color developing | 3min15sec | 38.0±0.1°C |
| 2. Bleaching | 6min30sec | 38.0±3.0°C |
| 3. Washing | 3min15sec | 24 ~ 41°C |
| 4. Fixing | 6min30sec | 38.0±3.0°C |
| 5. Washing | 3min15sec | 24 ~ 41°C |
| 6. Stabilizing | 3min15sec | 38.0±3.0°C |
| 7. Drying | | ≤50°C |

The compositions of the processing solutions applied to each of the above-given processing steps will be given below.

| (Color developer) | |
|---|---|
| 4-amino-3-methyl-N-ethyl-N-(β-hydroxyethyl) aniline·sulfate | 4.75 g |
| Sodium sulfite, anhydrous | 4.25 g |
| Hydroxylamine·1/2 sulfate | 2.0 g |
| Potassium carbonate, anhydrous | 37.5 g |
| Sodium bromide | 1.3 g |
| Trisodium nitrilotriacetate (monohydrate) | 2.5 g |
| Potassium hydroxide | 1.0 g |
| Add water to make | 1000 ml |
| | (pH=10.1) |

| (Bleacher) | |
|---|---|
| Iron (III) ammonium ethylenediamine tetraacetate | 100.0 g |
| Diammonium ethylenediamine tetraacetate | 10.0 g |
| Ammonium bromide | 150.0 g |
| Glacial acetic acid | 10.0 g |
| Add water to make | 1000 ml |
| Adjust pH with aqueous ammonia to be | pH=6.0 |

| (Fixer) | |
|---|---|
| Ammonium thiosulfate | 175.0 g |
| Sodium sulfite, anhydrous | 8.5 g |
| Sodium metasulfite | 2.3 g |
| Add water to make | 1000 ml |
| Adjust pH with acetic acid to be | pH=6.0 |

| (Stabilizer) | |
|---|---|
| Formalin (in an aqueous 37% solution) | 1.5 ml |
| Konidux (manufactured by Konica Corp.) | 7.5 ml |
| Add water to make | 1000 ml |

(4) Density measurement

Density is to be represented by $\log_{10} (\Phi_0/\Phi)$, wherein $\Phi_0$ represents an illumination flux for measuring a density and $\Phi$ represents a transmission luminous flux of a position subject to measurement. The geometric conditions for density measurements are that the illumination flux is to be a luminous flux parallel to the normal line, that it is to be standardized to use the whole luminous flux transmitted in the form of a transmission flux so as to be diffused in

semispace, that a compensation is to be made by a standard density piece if any other measurement methods are taken, and that an emulsion-coated surface is to be faced to the side of a light-receiving unit when making a measurement. The density measurements are carried out in terms of the status M densities in blue, green and red. The spectral characteristics thereof are to have the following values and are to be regarded as the overall characteristics of the light source, optical system, optical filters and light-receiving unit each used in a densitometer.

Spectral characteristics of Status M Densities
(In the logarithmic terms and 5.00 was standardized as a peak)

| Wavelength (nm) | Blue | Green | Red |
|---|---|---|---|
| 400 | * | I | I |
| 410 | 2.10 | I | I |
| 420 | 4.11 | I | I |
| 430 | 4.63 | * | I |
| 440 | 4.37 | I | I |
| 450 | 5.00 | I | I |
| 460 | 4.95 | I | * |
| 470 | 4.74 | 1.13 | I |
| 480 | 4.34 | 2.19 | I |
| 490 | 3.74 | 3.14 | I |
| 500 | 2.99 | 3.79 | I |
| 510 | 1.35 | 4.25 | I |
| 520 | I | 4.61 | I |
| 530 | I | 4.85 | I |
| 540 | I | 4.98 | I |
| 550 | I | 4.98 | I |
| 560 | I | 4.80 | I |
| 570 | I | 4.44 | I |
| 580 | I | 3.90 | I |
| 590 | I | 3.15 | I |
| 600 | I | 12.22 | I |
| 610 | I | 1.05 | I |
| 620 | I | I | 2.11 |
| 630 | ** | I | 4.48 |
| 640 | I | I | 5.00 |
| 650 | I | ** | 4.90 |
| 660 | I | I | 4.58 |
| 670 | I | I | 4.25 |
| 680 | I | I | 3.88 |
| 690 | I | I | 3.49 |
| 700 | I | I | 3.10 |
| 710 | I | I | 2.69 |
| 720 | I | I | 2.27 |
| 730 | I | I | 1.86 |
| 740 | I | I | 1.45 |
| 750 | I | I | 1.05 |
| | | | ** |

wherein * indicates that Red slope was 0.260/nm, green slope was 0.106/nm and blue slope was 0.250/nm; and ** indicates that Red slope was 0.040/nm, green slope was 0.120/nm and blue slope was 0.220/nm.

(5) Determination of Specific Photographic Speeds

By making use of the processes and the density measurement results obtained under the conditions given in the above-mentioned (1) through (4), the specific photographic speeds are to be determined in the following procedures.

(i) The exposure quantities each corresponding to a density 0.15 higher than each of the minimum blue, green and red densities are expressed in the terms of lux·seconds and the resulting densities are represented by $H_B$, $H_G$ and $H_R$, respectively.

(ii) $H_B$ or $H_R$ whichever has a greater value (or a lower sensitive speed) is to be represented by $H_S$.

(iii) Specific photographic speed S is to be calculated in the following formula.

$$S = \sqrt{\frac{2}{H_G \times H_S}}$$

Another method for setting the RMS granularity in unexposed areas is to reduce the fog produced with a silver halide emulsion. There have so far been many known methods for reducing the fog produced with silver halide emulsions. For example, any known antifoggants may be used as the additives to silver halide emulsions. For achieving the objects of the invention, it is effective to use a silver halide emulsion prepared so that any fog can hardly be produced by devising the conditions for producing a silver halide emulsion. As given in JP Application No. 2-23336/1990 for example, in the preparation of a silver halide emulsion applied with an aqueous ammoniacal silver nitrate solution, a low-fog silver halide emulsion can be obtained by forming silver halide at a pH of not higher than 5.7.

As for the other methods for reducing a fog production, the methods such as that given in JP OPI Publication Nos. 3-172836/1991 and 3-189641/1991 are also effective, wherein silver halide grains are formed in the presence of an oxidizer.

The RMS granularity stated in this invention is to be measured in the following manner.

The RMS values are measured in the following manner. An unexposed light sensitive material is developed in the above-mentioned specific photographic speed measurement method and the resulting processed light sensitive material is measured by a microdensitometer.

With each of the samples, the density of the portions thereof subject to measurement is scanned by a microdensitometer with an aperture having a 1800μm$^2$ scanning area (having a slit width of 10μm and a slit length of 180μm) and then the standard deviation of the variations of the densities of not less than 1000 measured samples was obtained. The RMS values are expressed in terms of the values 1000 times as much as the resulting standard deviation of the densities of the samples.

When carrying out the above-mentioned measurements, the RMS granularities of a blue sensitive layer, a green sensitive layer and a red sensitive layer are measured by making use of Wratten Filters W-47, W-99 and W-26 each manufactured by Eastman Kodak Co., respectively.

In the light sensitive materials of the invention, the specific photosensitive speeds thereof determined in the above-mentioned method are each not slower than 320. When the photosensitive speed is slower than 320, an under-exposure may be produced in a phototaking unit in which a focusing can easily be made by making the aperture value closer than those of any ordinary type cameras so as to make the depth of field wider, or a picture blur may be produced by shaking the phototaking unit even if taking a measure to make the shutter speed slower.

It is desired that the light sensitive materials of the invention are to have a specific photosensitive speed of not slower than 350.

After the light sensitive materials of the invention are developed, the RMS granularities of the unexposed areas thereof are not more than 15 for blue light, not more than 13 for green light and not more than 14 for red light when measuring them in the above-mentioned method. When an RMS granularity exceeds the corresponding specific value given above, the resulting grain shapes may visually be recognized when judging the negative frames and the correction of the printing conditions may also be affected, so that the yields may be caused to be lowered. It is further desired that the RMS granularities are not more than 13 for blue light, not more than 11 for green light and not more than 13 for red light.

In the light sensitive materials of the invention, the coating weight of silver thereof is not more than 10.0 g/m$^2$, desirably not more than 9.0 g/m$^2$ and preferably within the range of 4.5 to 8.0 g/m$^2$. From the viewpoints that the costs can be saved by popularly applying a high speed light sensitive material to a general photography so as to reduce the probability of producing print failures and, in addition, that a fog increased by heat or natural radiation in storing the light sensitive material and a granularity deterioration in a fogged portion that is an unexposed portion may both be reduced, it would be better to reduce a coating weight of silver.

The light sensitive materials of the invention have at least one each of red sensitive silver halide emulsion layers, green sensitive silver halide emulsion layers and blue sensitive silver halide emulsion layers. It is, however, desired that any of the emulsion layers having same color sensitivity is to be comprised of two or more emulsion layers having different sensitivities and it is further desired when each of the layers is to be comprised of three layers and a granularity improving method is also applied thereto. The above-mentioned techniques are detailed in British Patent No. 923,045 and JP Examined Publication No. 49-15495/1974.

In the invention, it is further desired to make combination use of various other high sensitive speed providing techniques. The typical examples of the high sensitive speed providing techniques desirable to make combination use in the invention will be given below. However, the invention shall not be limited thereto.

(1) A yellow filter dye;
(2) A sensitizing dye including particularly the later-detailed supersensitizing dye;
(3) Core/shell type double-layer structured silver halide grains each comprising a core section and a shell section, in which the former section has a silver iodide concentration higher than in the latter section;
(4) Multi-layer structured grains in which the silver iodide concentration of each layer of the grains are precisely controlled;
(5) Tabular-shaped silver halide grains having an aspect ratio of not less than 1.5;
(6) Monodisperse type silver halide grains;
(7) A divalent coupler;
(8) A high-speed reactive coupler;
(9) An inverted layer structure and a unit layer structure; and
(10) A technique for making the average silver iodide content of the whole emulsion layer to be not less than 8 mol%.

For making both of a high photosensitive speed and a high image quality compatible, various inventions have been devised of the layer arrangement order. It is desired to make combination use of these techniques. [See the above-given paragraph (9)] The techniques of the layer arrangement order are detailed in, for example, U.S. Patent Nos. 4,184,876, 4,129,446, 4,186,011, 4,186,016, 4,267,264, 4,173,479, 4,157,917 and 4,165,236; British Patent Nos. 1,560,955, 2,137,372 and 2,138,962; and JP OPI Publication Nos. 59-177552/1984, 59-180556/1984 and 59-204038/1984.

It is allowed to interpose particularly a non-light-sensitive layer between two or more emulsion layers each having the same color sensitivity.

It is also allowed that a photosensitive speed may be increased by providing a reflection layer comprising fine-grained silver halide underneath a highly photosensitive layer including particularly a high speed blue sensitive layer. This technique is detailed in, for example, JP OPI Publication No. 59-160135/1984.

It is can ordinary case where a red sensitive emulsion layer contains a cyan-forming coupler, a green sensitive emulsion layer contains a magenta-forming coupler and a red sensitive emulsion layer contains a yellow-forming coupler, respectively. There may be some instances where any other different combinations than the above may be taken. For example, it is also allowed that infrared sensitive layers are combined together so as to use them for pseudocolor photography or semiconductor laser exposure.

It is allowed to use such a method that the color sensitivities of emulsion layers and color image-forming couplers are so suitably combined with each other so that the layer is arranged to the farthest position from a support, as detailed in U.S. Patent No. 3,497,350 or JP OPI Publication No. 59-214853/1984.

In the photographic emulsion layers of the light sensitive materials of the invention, any one of silver bromide, silver iodobromide, silver iodochlorobromide, silver chlorobromide and silver chloride may be used as a silver halide. The desirable silver halides include silver iodobromide having a silver iodide content of not more than 30 mol% and the preferable one is silver iodobromide having a silver iodide content within the range of 2 to 20 mol%.

For making both of a highly photosensitive speed and a high image quality compatible, it is desired that the average silver iodide content of the silver halides in the whole emulsion layer is to be not less than 8 mol%, as described in JP OPI Publication No. 60-128443/1985. It has been known that a granularity can remarkably be improved when lowering the average silver iodide content of silver halides. However, if a silver iodide content exceeds a certain level, Some defects such as the retardation of a development speed, a desilvering acceleration and the retardation of a fixing speed may be produced. The invention is, however, very desirable because the silver contents therein is few and the layer thickness thereof is thin, so that the above-mentioned defects can hardly be produced should the silver iodide content be increased.

In the photographic emulsion layers of the photographic light sensitive materials of the invention, the silver grains applicable thereto are each desirable to have a double-layered structure which consist of a core substantially comprising silver iodobromide having a silver iodide content of not less than 5 mol% and a core-covering shell substantially comprising comprising silver iodobromide or silver bromide having a silver iodide content lower than those of the cores. The silver iodide contents of the cores are more desirable to be not less than 10 mol% and most desirable to be within the range of 20 to 44 mol%. It is desired that the silver iodide contents of the shells are desirable to be not more than 5 mol%.

The cores may uniformly contain silver iodide for one case or may have a multi-layered structure comprising the phases each different in the silver iodide contents for the other case. The latter case may be satisfiably embodied when the phase having the highest silver iodide content has a silver iodide content of not less than 5 mol% and desirably not

less than 10 mol%, and when the silver iodide contents of the shells are lower than that of the core phase having the highest silver iodide content specified. The expression, '--- (a thing) substantially comprising silver iodobromide ---', herein means that the thing mainly comprises silver iodobromide, but the thing may also contain the other components in a proportion of the order of 1 mol%.

In a more desirable embodiment of the silver halide grains applicable to the photographic emulsion layers of the photographic light sensitive materials of the invention, the grains have the following structure. When a curve of the diffraction strength of the (220) face of a silver halide to the diffraction angle thereof is made out at a diffraction angle (2θ) within the range of 38 to 42° by making use of a Kβ rays of Cu, two diffraction maximum peaks will appear, one corresponding to the core section and the other to the shell section, and one diffraction minimum will appear between the two peaks; and the diffraction strength of the core section is to be within the range of 1/10 to 3/1, desirably 1/5 to 3/1 and more desirably 1/3 to 3/1 as much as that of the shell section.

When the grains have such a double layered structure as described above, a silver iodobromide emulsion having a high iodine content can be used without retarding a development speed, so that a light sensitive material having an excellent granularity can be prepared even if the coating weight of silver is reduced.

In another desirable embodiment of the silver halide grains applicable to the photographic emulsion layers of the photographic light sensitive materials of the invention, the grains have the following structure. Inside each of the grains, there is a core-forming silver iodobromide phase having a silver iodide content within the range of 10 to 40 mol%; the silver iodobromide phase is covered by a shell-forming silver halide having a silver iodide content lower than the above; and the grain surfaces contain each silver iodide in an amount of not less than 5 mol%. In this embodiment, silver iodide contained in the shell section may be uniform or not uniform. The expression, 'a grain surface contains silver iodide of not less than 5 mol%', herein means that the average silver iodide content of the grain surface is to be not less than 5 mol% and desirably within the range of 7 to 15 mol%, when measured in an XPS method. The above-described silver halide grains are detailed in JP Application No. 61-253370/1986. The above-mentioned grains are desirable, because they have an excellent granularity.

In a further desirable embodiment of the silver halide grains, each of the silver halide grains has an inner core substantially comprising silver bromide and/or silver iodide and plural outer shells each substantially comprising silver bromide and/or silver iodobromide and arranged to the outside of the inner core; the outermost shell has a silver iodide content of not more than 10 mol%; a high silver iodide-containing shell having a silver iodide content of not less than 6 mol% higher than that of the outermost shell is arranged to the inside of the outermost shell; between the outermost shell and the high silver iodide-containing shell, a intermediate shell is arranged so as to have a silver iodide content intermediate between those of the two shells; and the silver iodide content of the intermediate shell is not less than 3 mol% higher than that of the outermost shell and the silver iodide content of the high silver iodide-containing shell is not less than 3 mol% higher than that of the intermediate shell. This type silver halide grains are detailed in JP OPI Publication No. 61-245151/1986. The silver halide grains are also desired, because they are excellent in granularity.

Further, as the other desirable embodiments of the silver halide grains, the silver halide grains having such a monodispersibility as defined below may be included. As defined in the following formula, the term, 'monodispersibility', can be used when standard deviation S of grain sizes is divided by average grain size $r_m$, the answer is then multiplied by 100 (hereinafter referred to as a variation coefficient) and the resulting variation coefficient is not more than 16.

$$(S/r_m) \times 100 \leq 16\ (\%)$$

wherein S represents a standard deviation generally used in statistics.

It is also allowed that the monodisperse type silver halide grains may be double- or multi-layered structure as described above.

The configuration of the monodisperse type silver halide grains may be cubic, octahedral or tetradecahedral shaped, or may also be globular or tabular shaped.

When the monodisperse type silver halide grains are excellent in granularity and have a grain size within the few light scattering range, they are desirable, because the image sharpness thereof is also excellent. The monodisperse type silver halide grains are detailed in JP OPI Publication Nos. 54-48521/1979, 54-99419/1979, 56-16124/1981, 55-78831/1980, 57-182730/1982, 58-49938/1983 and 58-37635/1983; U.S. Patent Nos. 4,444,877 and 4,446,228; JP OPI Publication Nos. 58-106532/1983, 58-107530/1983, 58-126531/1983, 58-149037/1983, 59-10947/1984, 59-29243/1984, 59-72440/1984, 59-140443/1984, 59-148049/1984, 59-177535/1984 and 59-152438/1984; and so forth.

Still further silver halide grains desirably applicable to the light sensitive materials of the invention include, for example, tabular-shaped grains having an aspect ratio of not less than 5.

It is desired that the silver halide grains applicable to the invention are to be spectrally sensitized with a sensitizing dye in an ordinary method. It is also allowed that the emulsions thereof may contain a sensitizing dye and, besides, a

material showing a super-sensitization, that is a dye having no spectral sensitization function in itself or a material substantially incapable of absorbing any visible rays of light. For example, it is allowed to contain therein an aminostyryl compound substituted with a nitrogen-containing heterocyclic group (such as those given in U.S. Patent Nos. 2,993,390 and 3,635,721) an aromatic organic acid formaldehyde condensate (such as those given in U.S. Patent No. 3,743,510), a cadmium salt and an azaindene compound. It is particularly useful to use the combinations given in U.S. Patent Nos. 3,615,613, 3,615,641, 3,617,295 and 3,635,721.

For the silver halide emulsions applicable to the color photographic light sensitive materials of the invention having a specific photosensitive speed of not slower than 320, they are used upon making them spectrally sensitized so as to increase the sensitivity to visible rays of light having a required wavelength.

For reducing the characteristic deterioration produced by natural radiation as much as possible, it is desired to make the sensitivity to radiation lower. According to the studies made by the present inventors, the sensitivity of a silver halide emulsion to radiation shows an excellent correlation to the so-called inherent sensitivity, but does not always show the correlation to the so-called color sensitizing speed. Therefore, for reducing the characteristic deterioration produced by natural radiation while keeping a high sensitivity to light, it is desired to use an emulsion having a high color sensitizing speed and a low inherent photosensitive speed. For this purpose, it is particularly desired to use the foregoing super sensitizer capable of increasing only the color sensitizing speed without varying the inherent photosensitive speed thereof. It is also desired to use an emulsion after adding a sensitizing dye as many as possible provided that the color sensitizing speed may not seriously be lowered and then making the inherent photosensitive speed lowered by the so-called inherent desensitization. It is further desired to use tabular-shaped grains having a high color sensitizing efficiency provided by a sensitizing dye and having an aspect ratio of not less than 1.5.

The tabular-shaped grains can easily be prepared in the procedures detailed in, for example, Gutoff, 'Photographic Science and Engineering', Vol.14, pp.248~257 (1970); U.S. Patent Nos. 4,434,226, 4,414,310, 4,433,048 and 4,439,520; and British Patent No. 2,112,157.

To the photographic emulsion layers of the photographic light sensitive materials of the invention, a color coupler is to be added as a dye image-forming material.

For example, the magenta couplers include a 5-pyrazolone coupler, a pyrazolobenzimidazole coupler, a cyanoacetyl cumarone coupler and an acylacetonitrile coupler. The yellow couplers include an acylacetamide coupler (such as a benzoyl acetanilide and a pivaloylacetanilide). The cyan couplers include a naphthol coupler and a phenol coupler. These couplers are desired to be of the non-diffusible type couplers having a hydrophobic group so-called a ballast group in the molecules of the couplers or of the polymerized couplers. The couplers may be 4-equivalent or 2-equivalent to silver ions, either. For reducing the silver content of a light sensitive material, it is desired to use a 2-equivalent type coupler, because it has a higher silver utilizing efficiency. Particularly when the same color-sensitive emulsion layers are consisted of two or more emulsion layers each different in photosensitive speeds, it is desired to contain a 2-equivalent type coupler in the red-, green- and blue-sensitive emulsion layers each having the highest photosensitive speeds.

In the invention, it is desired to add such a 2-equivalent type coupler as mentioned above to the component emulsion layer having the highest sensitive speed at least among each of the color sensitive layers. There is so special limitation to the amount thereof to be added. However, it is suitable to add a high-speed reactive cyan coupler within the range of 0.005 to 0.1 mols, a high-speed reactive magenta coupler within the range of 0.005 to 0.1 mols and a high-speed reactive yellow coupler within the range of 0.005 to 0.1 mols.

In the invention, when making use of an antidiffusible coupler of which the produced dye has a moderate diffusibility as specified in U.S. Patent No. 4,420,556, paragraphs 1 and 3 through 8, JP OPI Publication No. 59-191036/1984 and so forth, the sensitivity can be increased and the granularity can also be improved. These couplers can readily be synthesized in accordance with the procedures detailed in the above-given patents, JP OPI Publication Nos. 56-1938/1981, 57-3934/1982 and 53-105226/1978, U.S. Patent No. 4,264,.723 and so forth.

In the invention, it is also allowed contain a coupler capable of releasing a development inhibitant (the coupler is so-called a DIR coupler) in the course of a development process. The DIR couplers include, for example, those capable of releasing a heterocyclic mercapto type development inhibitor, given in U.S. Patent No. 3,227,554; those capable of releasing a benzotriazole derivative as a development inhibitor, given in JP Examined Publication No. 58-9942/1983; the so-called non-dye forming DIR coupler, given in JP Examined Publication No. 51-16141/1976; those capable of releasing a nitrogen-containing heterocyclic development inhibitor with the decomposition of methylol after completing the splitting off, given in JP OPI Publication No. 52-90932/1977; those capable of releasing a development inhibitor with making an intermolecular nucleophilic reaction in the course of the splitting off, given in U.S. Patent No. 4,248,962; those capable of releasing a development inhibitor upon making an electron-transfer through a conjugated system after completing a splitting off, given in JP OPI Publication Nos. 56-114946/1981, 57-56837/1982, 57-154234/1982, 57-188035/1982, 58-98728/1983, 58-209736/1983, 58-209737/1983, 58-209738/1983 and 58-209740/1983; those capable of releasing a diffusible development inhibitor deactivating the development inhibiting function thereof in a developer, given in JP OPI Publication No. 57-151944/1982; and those capable of releasing a reactive compound so as

to produce or deactivate a development inhibitor in the course of a development process, given in JP OPI Publication Nos. 60-182438/1985 and 60-184248/1985.

In the invention, a colored coupler having a color-compensation effect may also be used, besides the above-given couplers. It is further allowed to contain a non-dye forming DIR coupling compound having a colorless coupling reaction product and capable of releasing a development inhibitor, besides DIR couplers.

In the invention, a high sensitization can be achieved by making use of a development accelerator or a compound capable of producing a foggant, in the course of a silver development process. These compounds can readily be prepared in the procedures detailed in, for example, U.S. Patent Nos. 4,390,618, 4,518,682, 4,526,863 and 4,482,629; and JP OPI Publication Nos. 59-157638/1984, 59-170840/1984, 60-185950/1985 and 60-107029/1985.

For satisfying the characteristics required for light sensitive materials, two or more kinds of the above--mentioned couplers can be used in combination in one and the same layer and one and the same compound can also be added without trouble into two or more different layers.

The couplers may be introduced into silver halide emulsion layers in any known methods including, for example, the method detailed in U.S. Patent No. 2,322,027. For example, a coupler is dispersed in a hydrophilic colloid after dissolving it in a phthalic acid alkyl ester (such as dibutyl phthalate and dioctyl phthalate), a phosphoric acid ester (such as diphenyl phosphate, triphenyl phosphate, tricresyl phosphate and dioctylbutyl phosphate), a citric acid ester (such as tributyl acetylcitrate), a benzoic acid ester (such as octyl benzoate), an alkyl amide (such as diethyllauryl amide), an aliphatic acid ester (such as dibutoxyethyl succinate and diethyl azelate) and tributyl trimesate; or an organic solvent having a boiling point within the range of about 30 to 150°C including, for example, a lower alkyl acetate such as ethyl acetate and butyl acetate, ethyl propionate, secondary butyl alcohol, methyl isobutyl ketone, β-ethoxyethyl acetate and methyl cellosolve acetate. It is also allowed to use both of the above-given high boiling organic solvents and the low boiling organic solvents in the mixture form.

A dispersion method may also be applied by making use of the polymers given in JP Examined Publication No. 51-39853/1976 and JP OPI Publication No. 51-59943/1976.

When a coupler has an acid group such as those of carboxylic acid or sulfonic acid, the coupler is introduced, in the form of an aqueous alkaline solution, into a hydrophilic colloid.

A photographic color developing agent applicable thereto may be convenient when it is so selected as to give a mid-scaled image. It is desired that a cyan dye produced of a cyan color developing agent has a maximum absorption range between 600 to 720nm approximately, a magenta dye produced of a magenta color developing agent has a maximum absorption range between 500 to 580nm approximately and a yellow dye produced of a yellow color developing agent has a maximum absorption range between 400 to 480nm approximately.

In the light sensitive materials of the invention, the hydrophilic colloidal layers thereof are also allowed to contain a filter dye or a dye for the purpose of preventing an irradiation and for the other various purposes. Such a dye as mentioned above include, for example, an oxonol dye, a hemioxonol dye, a styryl dye, a melocyanine dye, a cyanine dye and an azo dye. Among these dyes, an oxonol dye, a hemioxonol dye and a melocyanine dye are useful. The typical examples of the dyes applicable thereto are given in, for example, British Patent Nos. 584,609 and 177,429; JP OPI Publication Nos. 48-85130/1973, 49-96620/1974, 49-114420/1985 and 52-108115/1977; and U.S. Patent Nos. 2,255,077, 2,274,782, 2,390,707, 2,493,747, 2,533,472, 2,843,286, 2,956,879, 3,148,187, 3,177,078, 3,247,127, 3,540,887, 3,575,704, 3,653,905, 3,718,472, 4,071,312, 4,070,352 and 4,420,555.

In the light sensitive materials of the invention, when a hydrophilic colloidal layer contains a dye, a UV absorbent or the like, these added materials may be mordanted with a cationic polymer or the like. For example, it is allowed to use the polymers given in British Patent No. 685,475; U.S. Patent Nos. 2,675,316, 2,839,401, 2,882,156, 3,048,487, 3,184,309 and 3,445,231; West German (OLS) Patent Application No. 1,914,362; and JP OPI Publication Nos. 50-47624/1975 and 50-71332/1975.

The color negative photographic light sensitive materials of the invention usually contain each a yellow filter layer. The yellow filter layers contain each colloidal silver or the above-given various dyes. In the case of the invention in particular, a filter effect can be excellent and the sensitivity of a green sensitive emulsion layer can remarkably be higher than in the case where colloidal silver is used.

To the light sensitive materials of the invention, a variety of any commonly applicable additives can also be applied. Such an additive as mentioned above include, for example, those given in U.S. Patent No. 4,599,301. The typical examples thereof may be given in the above-mentioned U.S. Patent, the 12th line of column 33 through 45th line of column 38. Namely, the surfactants (given in column 33), the water-insoluble or hardly soluble polymers (given in column 33 ~ 34), the UV absorbents (given in column 37 to 38), the anti-color-foggants (given in column 37), the anti-color-foggants (given in column 38), the hydroquinones (given in column 38) and so forth.

The light sensitive materials of the invention can be developed in accordance with the processes including, for example, those detailed in the above-given U.S. Patent, column 34 ~ 35. In addition to the above, a substantial water-saving can be achieved by a stabilizing or washing treatment, in the courses of carrying out a desilvering step and thereafter, as detailed in JP OPI Publication No. 61-35446/1986.

**EXAMPLES**

The preferable examples of the invention will now be detailed below. The embodiments of the invention shall not be limited thereto.

The main camera body for a phototaking unit shown in Fig.1 was manufactured.

The specifications were as follows. The image size: 13x36mm; Lens: 2-group, 2-element type, plastic made; Focal length: 25mm; F value: 11.5; Finder lens: Galilei's 2-element type; Finder magnification: 0.45X; Visual field: 100%; Shutter speed: 1/100 th sec.; Strobe-flash guide number: 9; and External dimensions: 121x58x42mm. The unit having the above-mentioned specifications is called Phototaking Unit A.

Another phototaking unit was manufactured in which the finder visual field of the phototaking unit A was changed to be 90% and the resulting unit is called Phototaking Unit B. A further phototaking unit was manufactured in which the finder visual field was changed to be 120% and a mark for indicating an effective image field was provided into the finder and the resulting unit is called Phototaking Unit C. A still further phototaking unit was manufactured in which the strobe-flash guide number of the phototaking unit A was changed to be 11 and the resulting unit is called Phototaking Unit D.

In addition to the above units, phototaking units E through L were each manufactured in the same manner, except that the visual fields of the phototaking units, the strobe-flash guide numbers and the focal lengths of the phototaking lenses were changed to be as follows.

| Phototaking unit | Visual field(%) | Strobe-flash guide number | Focal length of phototaking lens |
|---|---|---|---|
| E | 87 | 9 | 30 |
| F | 95 | 9 | 30 |
| G | 120 | 9 | 30 |
| H | 87 | 10.5 | 30 |
| I | 95 | 10.5 | 30 |
| J | 120 | 11 | 30 |
| K | 80 | 9 | 30 |
| L | 80 | 11 | 30 |

Next, a color light sensitive material was prepared.

In all the examples given below, the amounts of the materials added will be indicated in terms of grams per sq. meter unless otherwise expressly stated. The amounts of silver halides and colloidal silver will be indicated upon converting them into the silver contents.

Example 1

The sublayers having the following compositions were formed in order on the both surfaces of a triacetyl cellulose film support from the support side.

| Rearside layer 1 | |
|---|---|
| Alumina sol, AS-100 (aluminium oxide) (manufactured by Nissan Chemical Ind.Co.,Ltd.) | 0.1 g |
| Diacetyl cellulose | 0.2 g |
| **Rearside layer 2** | |
| Diacetyl cellulose | 100 mg |
| Stearic acid | 10 mg |
| Fine silica particles, (having an average particle size: 0.2μ) | 50 mg |

On the front surface of a subbed triacetyl cellulose film support, each of the photographic component layers having the following compositions was formed in order from the support side, so that a multilayered color photographic light sensitive material 101 could be prepared.

| Layer 1: Antihalation layer (HC) | |
|---|---|
| Black colloidal silver | 0.15 g |

(continued)

| Layer 1: Antihalation layer (HC) | |
|---|---|
| UV absorbent (UV-1) | 0.15 g |
| Compound (CC-1) | 0.02 g |
| High boiling solvent (Oil-1) | 0.18 g |
| High boiling solvent (Oil-2) | 0.18 g |
| Gelatin | 1.3 g |

| Layer 2: Low-speed red sensitive emulsion layer (RL) | |
|---|---|
| Silver iodobromide emulsion Em-3, (having an average grain size: 0.3µm; an average iodine content: 2.0 mol%) | 0.28 g |
| Silver iodobromide emulsion Em-1, (having an average grain size: 0.4µm; an average iodine content: 8.0 mol%) | 0.20 g |
| Sensitizing dye (S-1) | $3.2x10^{-4}$ mols/Ag mol |
| Sensitizing dye (S-2) | $3.2x10^{-4}$ mols/Ag mol |
| Sensitizing dye (S-3) | $0.2x10^{-4}$ mols/Ag mol |
| Cyan coupler (C-1) | 0.50 g |
| Cyan coupler (C-2) | 0.13 g |
| Colored cyan coupler (CC-1) | 0.07 g |
| DIR compound (D-1) | 0.006 g |
| DIR compound (D-2) | 0.001 g |
| High boiling solvent (Oil-1) | 0.55 g |
| Gelatin | 1.0 g |

| Layer 3: High speed red sensitive emulsion layer (RH) | |
|---|---|
| Silver iodobromide emulsion Em-2, (having an average grain size: 0.7µm; an average iodine content: 7.5 mol%) | 0.68 g |
| Sensitizing dye (S-1) | $1.7x10^{-4}$ mols/Ag mol |
| Sensitizing dye (S-2) | $1.6x10^{-4}$ mols/Ag mol |
| Sensitizing dye (S-3) | $0.1x10^{-4}$ mols/Ag mol |
| Cyan coupler (C-2) | 0.23 g |
| Colored cyan coupler (CC-1) | 0.05 g |
| DIR compound (D-2) | 0.02 g |
| High boiling solvent (Oil-1) | 0.21 g |
| Gelatin | 0.80 g |

| Layer 4: Interlayer (IL-2) | |
|---|---|
| Gelatin | 0.8 g |

| Layer 5: Low speed green sensitive emulsion layer (GL) | |
|---|---|
| Silver iodobromide emulsion Em-1, (having an average grain size: 0.4µm; an average iodine content: 8.0 mol%) | 0.30 g |
| Silver iodobromide emulsion Em-3, (having an average grain size: 0.3µm; an average iodine content: 2.0 mol%) | 0.24 g |
| Sensitizing dye (S-4) | $6.7x10^{-4}$ mols/Ag mol |
| Sensitizing dye (S-5) | $0.8x10^{-4}$ mols/Ag mol |

(continued)

| Layer 5: Low speed green sensitive emulsion layer (GL) | |
|---|---|
| Magenta coupler (M-1) | 0.17 g |
| Magenta coupler (M-2) | 0.43 g |
| Colored magenta coupler (CM-1) | 0.10 g |
| DIR compound (D-3) | 0.02 g |
| High boiling solvent (Oil-2) | 0.7 g |
| Gelatin | 1.4 g |

| Layer 6: High speed green sensitive emulsion layer (GH) | |
|---|---|
| Silver iodobromide emulsion Em-2, (having an average grain size: 0.7µm; an average iodine content: 7.5 mol%) | 0.64 g |
| Sensitizing dye (S-6) | $1.1x10^{-4}$ mols/Ag mol |
| Sensitizing dye (S-7) | $2.0x10^{-4}$ mols/Ag mol |
| Sensitizing dye (S-8) | $0.3x10^{-4}$ mols/Ag mol |
| Magenta coupler (M-1) | 0.30 g |
| Magenta coupler (M-2) | 0.13 g |
| Colored magenta coupler (CM-1) | 0.04 g |
| DIR compound (D-3) | 0.004 g |
| High boiling solvent (Oil-2) | 0.20 g |
| Gelatin | 0.80 g |

| Layer 7: Yellow filter layer (YC) | |
|---|---|
| Yellow colloidal silver | 0.08 g |
| Additive (SC-1) | 0.10 g |
| High boiling solvent (Oil-2) | 0.20 g |
| Gelatin | 0.80 g |

| Layer 8: Low speed blue sensitive emulsion layer (BL) | |
|---|---|
| Silver iodobromide emulsion Em-3, (having an average grain size: 0.3µm, an average iodine content: 2.0 mol%) | 0.19 g |
| Silver iodobromide emulsion Em-1, (having an average grain size: 0.4µm; an average iodine content: 8.0 mol%) | 0.19 g |
| Sensitizing dye (S-9) | $5.8x10^{-4}$ mols/Ag mol |
| Yellow coupler (Y-1) | 0.6 g |
| Yellow coupler (Y-2) | 0.32 g |
| DIR compound (D-1) | 0.003 g |
| DIR compound (D-2) | 0.006 g |
| High boiling solvent (Oil-2) | 0.38 g |
| Gelatin | 1.2 g |

| Layer 9: High speed blue sensitive emulsion layer (BH) | |
|---|---|
| Silver iodobromide emulsion Em-4, (having an average grain size: 1.2µm; an average iodine content: 8.5 mol%) | 0.45 g |
| Sensitizing dye (S-10) | $3.0x10^{-4}$ mols/Ag mol |
| Sensitizing dye (S-11) | $1.2x10^{-4}$ mols/Ag mol |

(continued)

| Layer 9: High speed blue sensitive emulsion layer (BH) | |
|---|---|
| Yellow coupler (Y-1) | 0.18 g |
| Yellow coupler (Y-2) | 0.10 g |
| High boiling solvent (Oil-2) | 0.05 g |
| Gelatin | 0.7 g |

| Layer 10: Protective layer I (PRO-1) | |
|---|---|
| Finely grained silver iodobromide, (having an average grain size: 0.08μm) | 0.15 g |
| UV absorbent (UV-1) | 0.07 g |
| UV absorbent (UV-2) | 0.07 g |
| Additive (HS-1) | 0.1 g |
| Additive (HS-2) | 0.05 g |
| High boiling solvent (Oil-1) | 0.07 g |
| High boiling solvent (Oil-3) | 0.07 g |
| Compound A | 0.04 g |
| Compound B | 0.004 g |
| Polymethyl methacrylate, (having an average particle size: 3μm) | 0.02 g |
| A polymer of methyl methacrylate: ethyl methacrylate: methacrylic acid = 3: 3: 4 (in weight ratio), (having an average particle size: 3μm) | 0.13 g |
| Gelatin | 1.0 g |

The compounds added to Sample 101 were as follows.

C-1

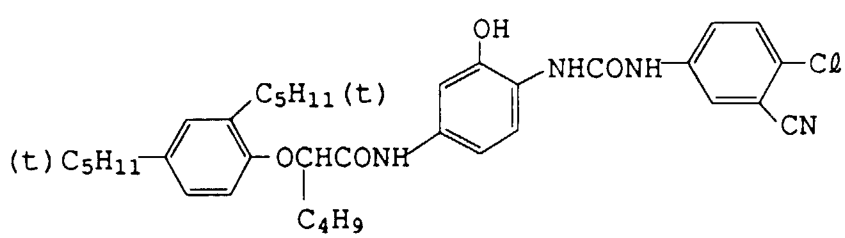

C-2

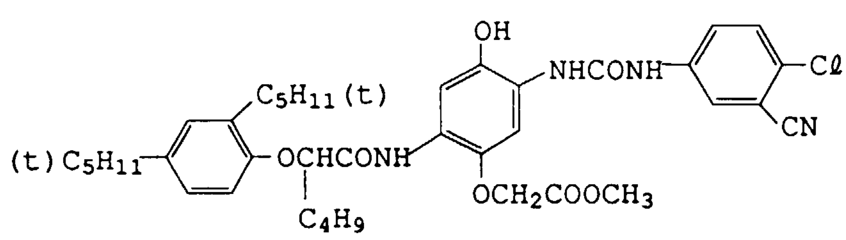

Y-1

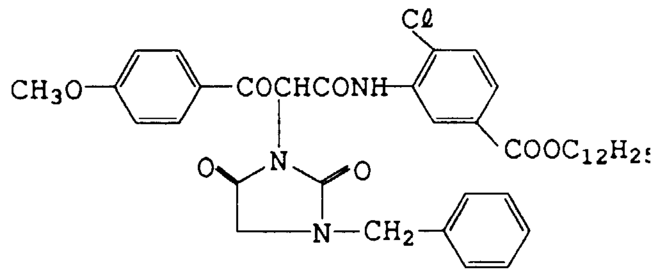

Y-2

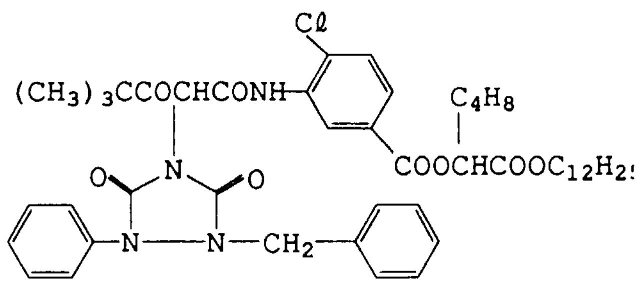

CC-1

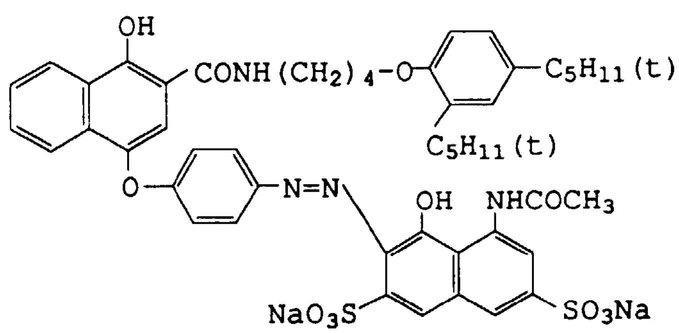

CM-1

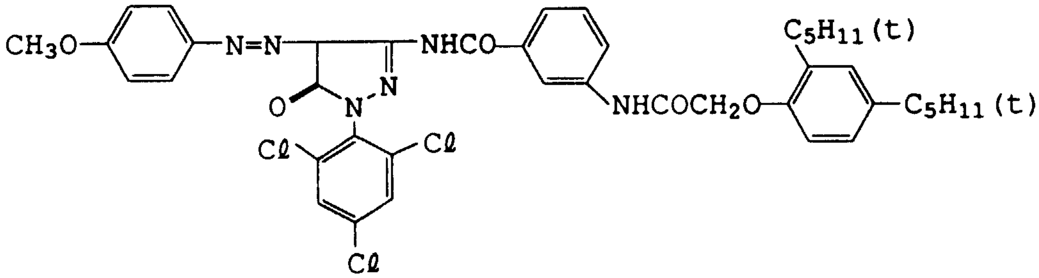

D-1

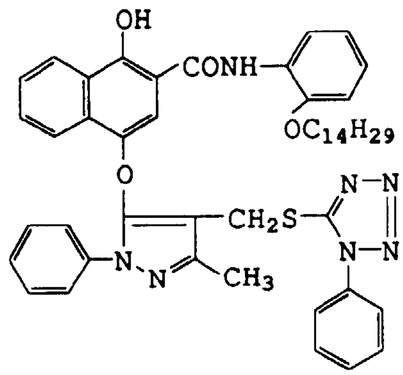

D-2

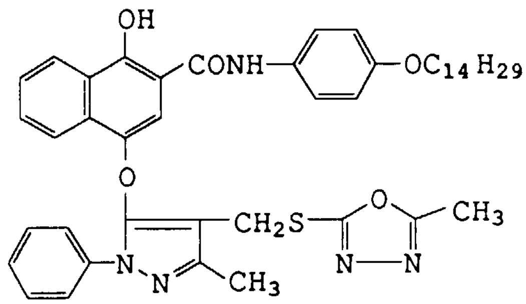

D-3

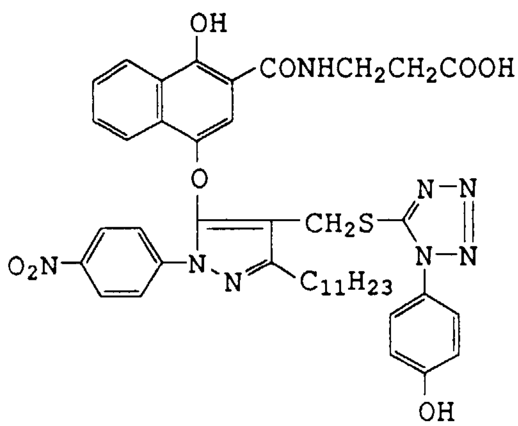

UV-1

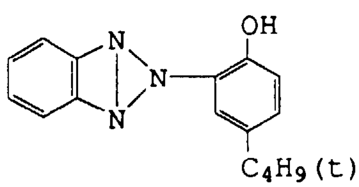

UV-2

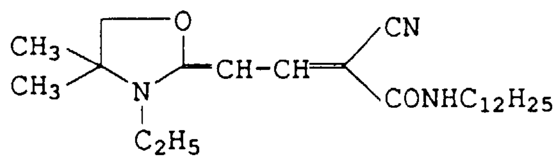

S-1

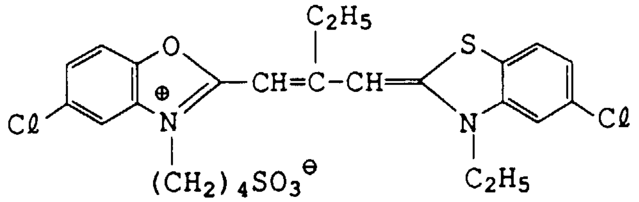

S-2

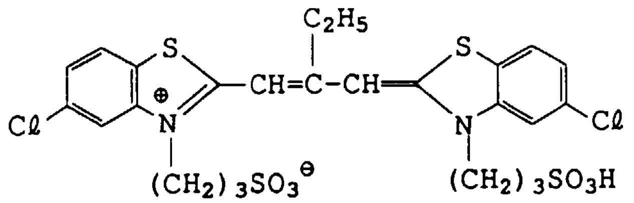

S-3

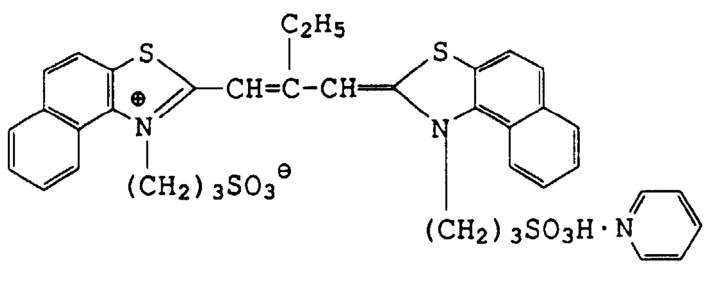

S-4

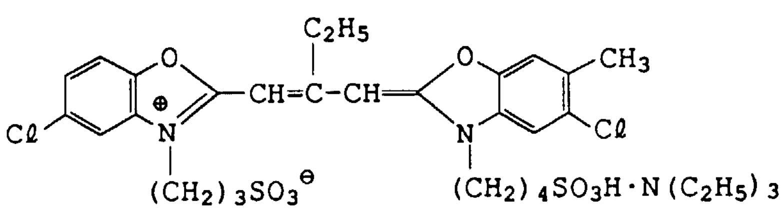

S-5

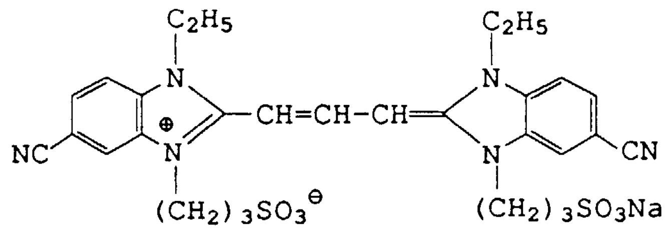

S-6

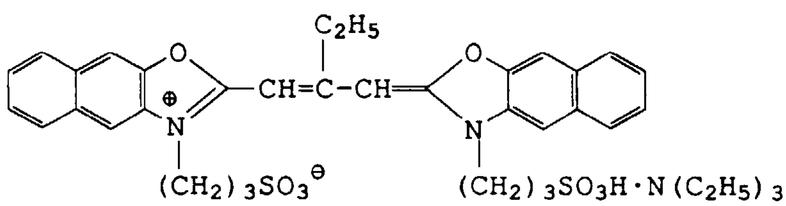

S-7

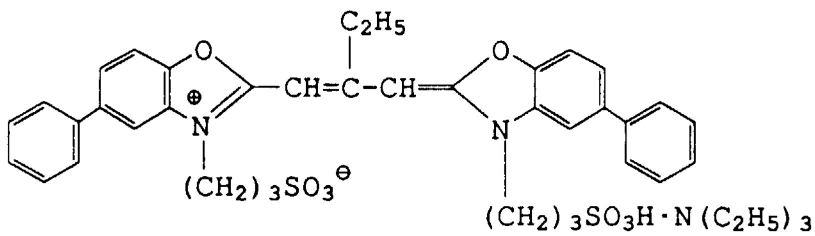

S-8

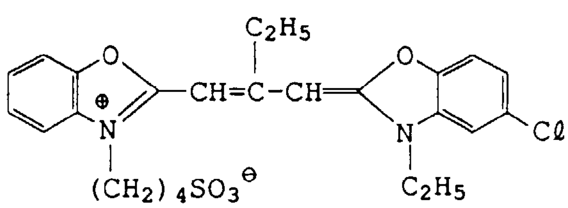

S-9

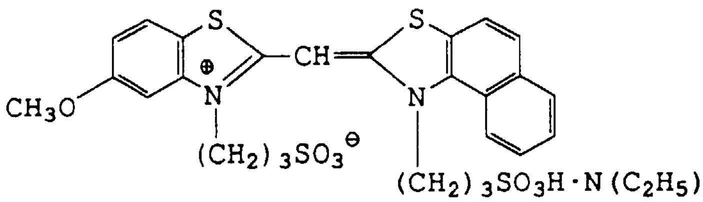

S-10

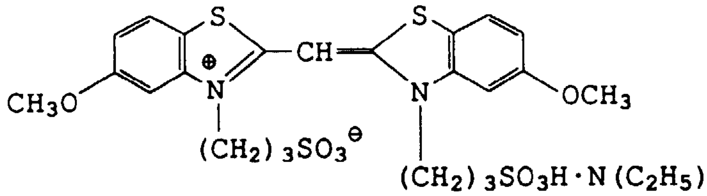

S-11

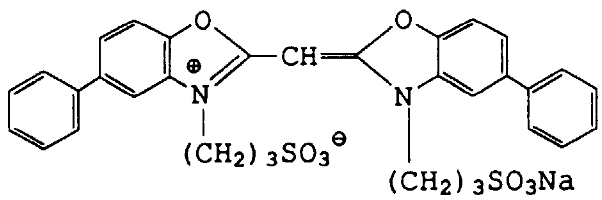

HS-1

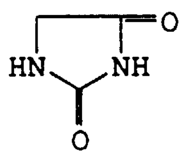

HS-2

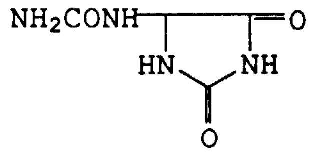

SC-1

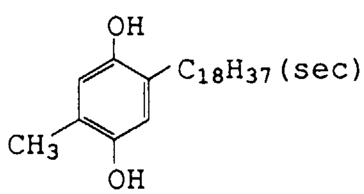

and

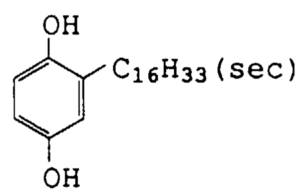

(A mixture in a ratio of 2 : 3)

Oil-1

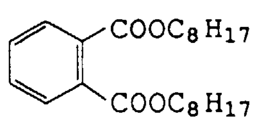

Oil-2

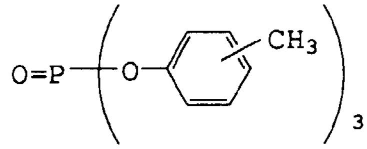

Oil-3

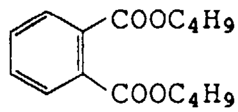

Compound A

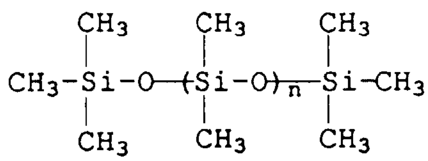

(Weight average molecular weight Mw = 3,000)

Compound B

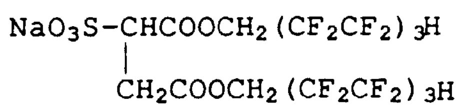

The resulting sample 101 further contained compounds SU-1 and SU-2, a viscosity controller, layer hardeners H-1 and H-2, stabilizer ST-1, antifoggants AF-1 and AF-2 (having the weight average molecular weights of 10,000 and 1,100,000, respectively), dyes AI-1 and AI-2, and compound DI-1 (in a proportion of 9.4 mg/m$^2$).

Surfactants SU-1 and SU-2 were coated each in an average amount of 0.36 g per gram of gelatin, on a photographic component layers. All the gelatin applied thereto had each a calcium content of not more than 100 ppm.

SU-1

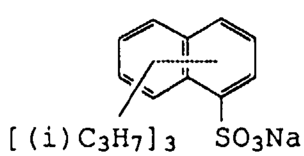

SU-2

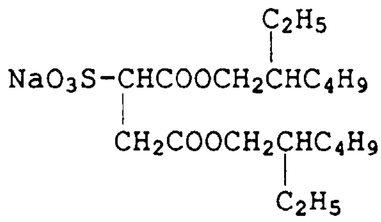

H-1 $(CH_2{=}CHSO_2CH_2)_4C$

ST-1

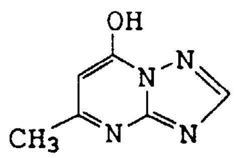

AF-1

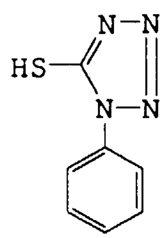

AF-2

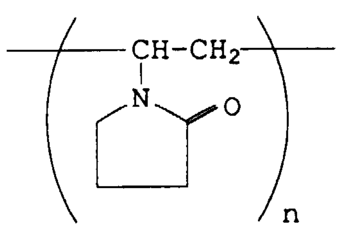

n : Polymerization degree

AI-1

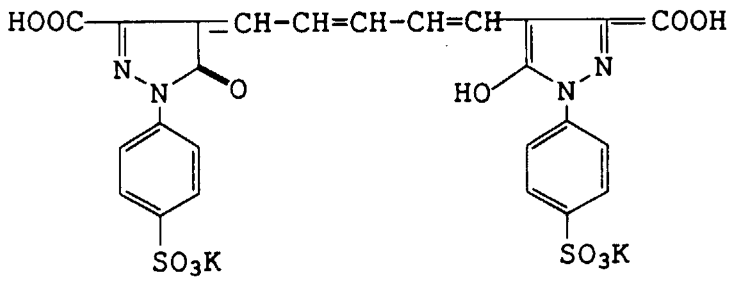

AI-2

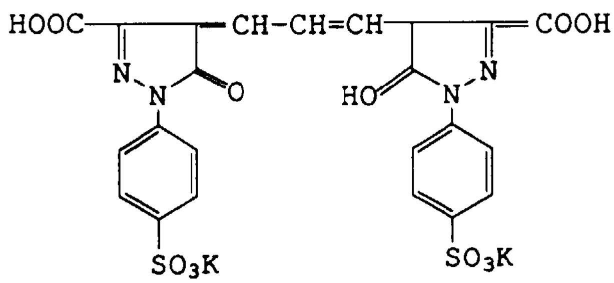

DI-1 (A mixture of the following 3 components)

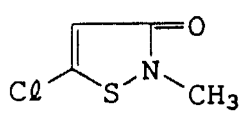 , 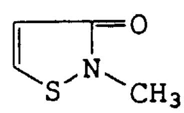 , 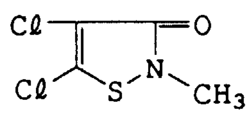

(Component A) (Component B) (Component C)

A : B : C = 50 : 46 : 4 (in mol ratio)

The emulsions applied to the above-described samples were as follows. The average grain sizes thereof were indicated by the cubic side lengths obtained by converting the grains into the cubes having the same volumes as those of the grains. Each of the emulsions was subjected to the optimum gold·sulfur sensitization.

| Emulsion No. | Average grain size (μm) |
|---|---|
| Em-1 | 0.4 |
| Em-2 | 0.7 |
| Em-3 | 0.3 |
| Em-4 | 1.2 |

Em-1, Em-2 and Em-4 were each applied with the multilayer-structured silver halide crystals indicated in JP OPI Publication No. 61-245151/1986 as a highly sensitizing technique. The structural conditions for these emulsions were as follows; namely, the silver halide producing temperatures were 40°C for Em-1 and 50°C for Em-2 and Em-4, and the pH values were within the range of 9 to 8 for the emulsions, when making use of a controlled double-jet method applied with an aqueous ammoniacal silver nitrate solution.

Sample 102 (of the Invention)

Sample 102 was prepared in the same manner as in Sample 101, except that Em-11, Em-2 and Em-4 were replaced by Em-1B, Em-2B and Em-4B each more excellent in fog-granularity and sensitivity.

For improving the uniformity and sensitivity each of the emulsions better than in the comparative examples, the multilayer-structured silver iodobromide emulsions were prepared by making use of the method described in JP Application No. 63-224002/1988 in which iodine ions are supplied from finely crystallized silver iodide. For reducing the fog produced in the emulsions more than in the comparative examples, the method for preparing a silver halide emulsion by making use of the aqueous ammoniacal silver nitrate solution, which is described in JP Application No. 2-23336/1990, was applied. In this emulsion preparation method in which ammoniacal silver nitrate is used, the pH and pAg were controlled to be within the ranges of 7~6 and 7.8~10.1 in the course of forming silver halides, respectively, and the silver halide was produced at 60°C.

The resulting emulsions were proved to be more uniform in grain sizes, lower in fogginess and higher in sensitivities, as compared to the emulsions used in the sample 101 of the comparative example. In the resulting emulsions, an equivalent sensitivity could be obtained by making the grain sizes smaller than in the emulsions used in the comparative examples. By making use of the resulting emulsions, a light sensitive material could be obtained so as to have a low RMS granularity in the unexposed areas, that is the constitution of the invention. The comparison of the emulsions will be given below.

| | | | | |
|---|---|---|---|---|
| Comparative Example 101 | Em-1 (0.4µm) | Em-2 (0.7µm) | Em-3 (0.3µm) | Em-4 (1.2µm) |
| Inventive Example 102 | Em-1B (0.32µm) | Em-2B (0.56µm) | Em-3B (0.3µm) | Em-4B (1.0µm) |

By making use of Samples 101 and 102, the specific sensitivities and the RMS granularities of the unexposed areas were obtained. Each of the measurements were made in accordance with the methods given in this patent specifications. The results thereof will be given in the following Table 1.

Table 1

| Sample No. | Specific photographic speed | Blue light (W-47)* | RMS value Green light (W-99)* | Red light (W-26)* |
|---|---|---|---|---|
| 101 (Comp) | 390 | 21 | 16 | 15 |
| 102 (Inv) | 410 | 14.5 | 12.5 | 13.5 |

Samples 101 and 102 were cut into the ordinary 135 size and the cut pieces were put into cartridges, respectively. The cartridges were loaded in the foregoing phototaking unit main bodies A through D, so that 10 units each of phototaking units $A_1 \sim L_1$ and $A_2 \sim L_2$, totalling 240 units, could be provided.

Any three units each of the phototaking units were given to 80 women and men and each of them took 24 portrait pictures without failure of making use of strobe-flash light.

After completing the development processes of the whole negative film through a Konica CNK-4, they were each printed on color printing paper under the optimum conditions, so that the service-sized prints were obtained, respectively.

The resulting prints were returned to the 80 photographers and the numbers of the unsatisfied prints and the reasons thereof were checked up from among the resulting 72 prints. The unsatisfaction ratios thereof will be shown below.

| Phototaking unit | Unsatisfaction ratio* | Phototaking unit | Unsatisfaction ratio* |
|---|---|---|---|
| $A_1$ | 8.4 | $A_2$ | 5.8 |
| $B_1$ | 12.0 | $B_2$ | 11.7 |
| $C_1$ | 9.6 | $C_2$ | 7.3 |
| $D_1$ | 8.8 | $D_2$ | 9.3 |
| $E_1$ | 12.5 | $E_2$ | 9.2 |
| $F_1$ | 10.4 | $F_2$ | 7.1 |

* Obtained in terms of the unsatisfaction ratios of each phototaking unit (%) = (Numbers of unsatisfied prints) x 100.

(continued)

| Phototaking unit | Unsatisfaction ratio* | Phototaking unit | Unsatisfaction ratio* |
|---|---|---|---|
| $G_1$ | 9.2 | $G_2$ | 6.3 |
| $H_1$ | 12.5 | $H_2$ | 9.2 |
| $I_1$ | 9.6 | $I_2$ | 6.7 |
| $J_1$ | 9.2 | $J_2$ | 6.3 |
| $K_1$ | 17.5 (Comparison) | $K_2$ | 15.4 (Comparison) |
| $L_1$ | 17.1 (Comparison) | $L_2$ | 15.0 (Comparison) |

* Obtained in terms of the unsatisfaction ratios of each phototaking unit (%) = (Numbers of unsatisfied prints) x 100.

As is obvious from the results shown above, when specifying a visual field in the range specified in the invention, the unsatisfaction ratios of the strobe-flash scenes could be so reduced as to be improved. However, when the phototaking units combined with a light sensitive material having the RMS granularity thereof in the range specified in the invention, the advantages of the improvements could remarkably be displayed.

Further, the samples of which the visual field ratio was made wider to be 125% and the other samples of which strobe-flash guide numbers were made to be 12 were each made on an experimental basis and were then tested. However, they were resultingly undesirable, because the highlight proportions of a subject came out too much white, so that many prints lacking in the photographic descriptions could have to be come out.

Example 2

Sample 202 was prepared in the same manner as in Sample 102 of Example 1, except that the emulsions of Layers 3 and 6 of Sample 102 of Example 1 were replaced by the core/shell type tabular-shaped silver iodobromide emulsion (having an average iodine content of 4.5 mol%) having an aspect ratio of 5.5 in 60% of the projective area and that the emulsion in Layer 9 was replaced by a core/shell type tabular-shaped silver iodobromide emulsion (having an average iodine content of 4.0 mol%) having an average aspect ratio of 7.8 in 50% of the projective area.

The resulting sample 202 had a specific photosensitivity of 400 and an RMS values of 14 for blue light, 11 for green light and 12.5 for red light, respectively.

Similar to Example 1, from the results of the evaluations made after loading the sample in phototaking unit A, it was confirmed that the effects of the invention could be displayed, because the unsatisfaction ratio was so low as to be 5.6%.

Example 3

Phototaking unit $E_2$ was prepared in the same manner as in phototaking unit $A_2$, except that the fixed aperture of phototaking unit $A_2$ was changed to 11.

The same evaluations were made and the resulting unsatisfaction ratio was 7.7% and the numbers of the unsatisfied under-exposed prints were slightly reduced. However, it was not desirable that the numbers of unsatisfied out-of-focus prints were increased.

**Claims**

1. A photo-taking unit (5) comprising a cartridge (21) containing a photographic colour film, an optical viewfinder (2) through which an image is observed, a photo-taking lens (1; 23) having a fixed focal length to form an image on the surface of said film and a fixed F-number, a strobe-flash (6) having a fixed guide number of not more than 11, wherein the optical axis of the optical viewfinder is different from the optical axis of the photo-taking lens, CHARACTERISED IN THAT the viewfinder field ratio lies in the range 87 to 120 percent, wherein the viewfinder field ratio is the ratio, as a percentage, of the area of the subject image viewed through the viewfinder field to the area of the subject image formed on said film, and the photographic colour film has an ISO sensitivity of not less than 320 and not more than 1,000 measured in accordance with JIS K 7614-1981 and, when unexposed, has an RMS granularity for blue light of not more than 15, for green light of not more than 13 and for red light of not more than 14 after photographic processing.

2. The photo-taking unit according to claim 1 characterised in that the fixed F-number of the photo-taking lens (1) is not less than 11.

3. The photo-taking unit according to claim 2 characterised in that the photo-taking lens (1) has an F-number in the range of 11.5 to 15.

4. The photo-taking unit according to either claim 1, claim 2 or claim 3, characterised in that the viewfinder (2) has a magnification in the range of 0.4 to 0.7.

**Patentansprüche**

1. Photoaufnahmeeinheit (5), umfassend eine Patrone (21) mit einem photographischen Farbfilm, einen optischen Bildsucher (2), durch den ein Bild betrachtet wird, eine Photoaufnahmelinse (1, 23) mit festgelegter Brennweite zur Erzeugung eines Bildes auf der Oberfläche des Films und einer fixierten F-Zahl, ein Blitzgerät (6) mit einer festgelegten Leitzahl von nicht mehr als 11, wobei die optische Achse des optischen Bildsuchers von der optischen Achse der Photoaufnahmelinse verschieden ist,
dadurch gekennzeichnet, daß das Bildsucherfeldverhältnis im Bereich von 87-120% liegt, wobei unter dem Bildsucherfeldverhältnis das prozentuale Verhältnis Fläche des durch das Bildsucherfeld jeweils betrachteten Bildes/ Fläche des auf dem Film gebildeten jeweiligen Bildes zu verstehen ist und der photographische Farbfilm eine gemäß der japanischen Industriestandardvorschrift JIS K 7614-1981 bestimmte ISO-Empfindlichkeit von nicht weniger als 320 und nicht mehr als 1000 und - in unbelichtetem Zustand - eine RMS-Körnigkeit für blaues Licht von nicht mehr als 15, für grünes Licht von nicht mehr als 13 und für rotes Licht von nicht mehr als 14 nach der photographischen Entwicklung aufweist.

2. Photoaufnahmeeinheit nach Anspruch 1, dadurch gekennzeichnet, daß die festgelegte F-Zahl der Photoaufnahmelinse (1) nicht weniger als 11 beträgt.

3. Photoaufnahmeeinheit nach Anspruch 2, dadurch gekennzeichnet, daß die Photoaufnahmelinse (1) eine F-Zahl im Bereich von 11,5 bis 15 aufweist.

4. Photoaufnahmeeinheit nach einem der Ansprüche 1, 2 oder 3, dadurch gekennzeichnet, daß der Bildsucher (2) eine Vergrößerung im Bereich von 0,4 bis 0,7 aufweist.

**Revendications**

1. Une unité de prise de vue (5) comprenant une cartouche (21) contenant un film couleur photographique, un viseur optique (2) à travers lequel on observe une image, un objectif de prise de vue (1 ; 23) ayant une longueur focale réglée pour former une image sur la surface dudit film et un nombre F fixe, et un flash stroboscopique (6) ayant un nombre guide fixe non supérieur à 11, dans lequel l'axe optique du viseur optique est différent de l'axe optique de l'objectif de prise de vue,
cette unité de prise de vue étant caractérisée en ce que le taux de couverture de champ du viseur se situe dans la fourchette comprise entre 87 et 120 %, le taux de couverture de champ étant le rapport, exprimé en pourcentage, de la surface de l'image du sujet observée à travers le champ du viseur à la surface de l'image du sujet formée sur ledit film et en ce que le film de couleur photographique présente une sensibilité ISO non inférieure à 320 et non supérieure à 1000, mesurée selon JIS K 7614-1981 et en ce que, en cas de sous exposition, la granulation RMS pour la couleur bleue est non supérieure à 15, pour la couleur verte est non supérieure à 13 et pour la couleur rouge est non supérieure à 14, après développement photographique.

2. L'unité de prise de vue selon la revendication 1, caractérisée en ce que le nombre F fixé de l'objectif de prise de vue (1) n'est pas inférieur à 11.

3. L'unité de prise de vue selon la revendication 2, caractérisée en ce que l'objectif de prise de vue (1) a un nombre F compris entre 1 1,5 et 15.

4. L'unité de prise de vue selon l'une quelconque des revendications 1, 2 ou 3, caractérisée en ce que le viseur (2) a un grossissement compris entre 0,4 et 0,7.

FIG. 1

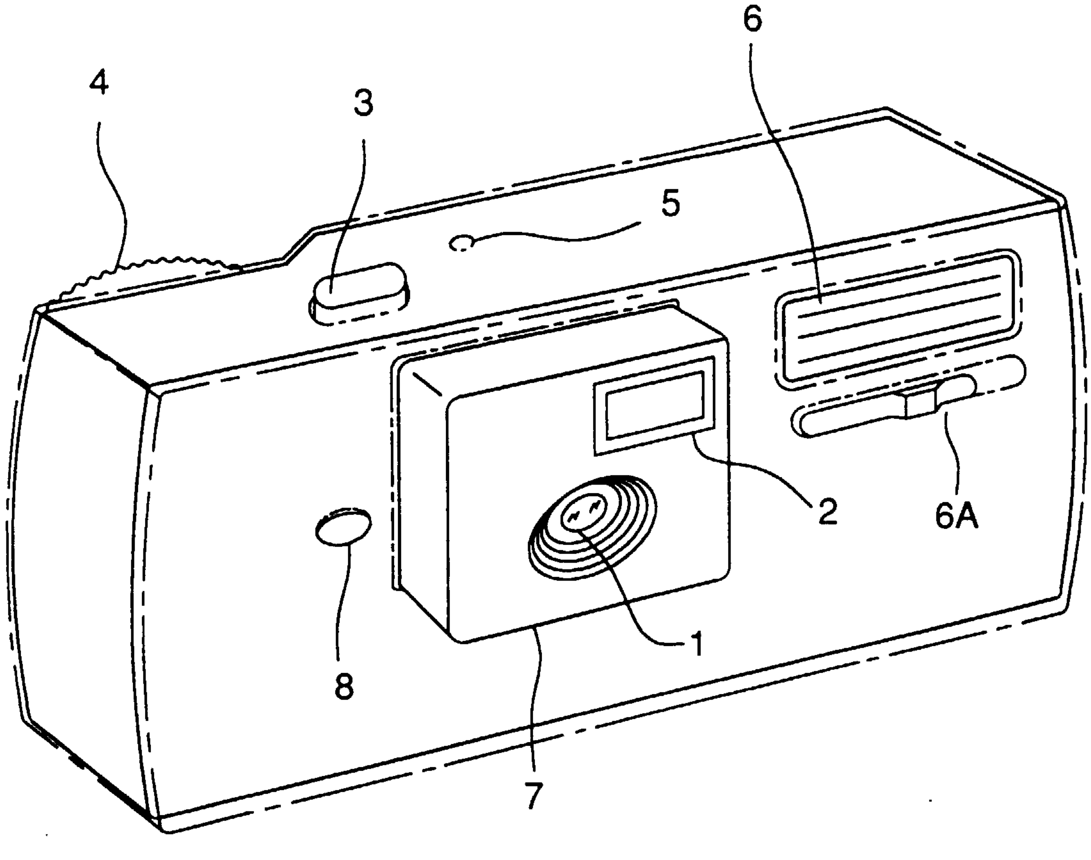

FIG. 2